# EUROPEAN PATENT APPLICATION

(11) **EP 4 807 960 A1**
(43) Date of publication of application: **16.09.2026**
(21) Application number: 25196850.9
(22) Date of filing: 19.08.2025
(51) Int. Cl.: H02M 1/00, H02M 3/00, H02M 3/335, H02M 1/40, H02M 3/158

(54) **A POWER CONVERTER**

(30) Priority: 13.03.2025 EP 25163429; 09.07.2025 EP 25188591
(71) Applicant: Infineon Technologies Austria AG, 9500 Villach (AT)
(72) Inventor: IOB, Federico, 33100 Udine (IT); RIZZOLATTI, Roberto, 9523 Villach (AT); SAGGINI, Stefano, 33100 Udine (IT); URSINO, Mario, 9500 Villach (AT); DEBOY, Gerald Josef, 9061 Klagenfurt (AT)
(74) Representative: Infineon Patent Department

(57) **Abstract**

The disclosed concepts relate to a power converter comprising a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. Each winding of each of the converter paths is inductively coupled to a winding of a different converter path, thereby forming a respective pair of inductively coupled windings. Each of the plurality of converter paths further comprise an additional series inductance.

## Description

### TECHNICAL FIELD

The present disclosure generally relates to a power converter, and methods for operating the power converter.

### BACKGROUND

Power converters (i.e., voltage regulators) that convert a 48V to a digital load voltage are typically based on a two-stage approach. A two-stage approach exploits the benefit of high step-down capability and high-power density of an unregulated Intermediate Bus Converter (IBC), while a second stage, which is typically designed with a buck converter, enables regulation at digital load level. To meet footprint requirements, high switching frequency operation is needed both in the first and second stages. However, high frequency operation leads to higher losses.

Moreover, various digital loads (e.g. microprocessors, accelerators, ASICs) have high current demands and strenuous transient requirements. In some cases, currents of up to 1000A at voltages of around 0.75V are required. At these levels, parasitic components may deteriorate dynamic performance of the converter rapidly, while also impairing the power conversion efficiency due to distribution losses.

There is hence a need to provide a power converter, particularly for powering modern processors, with high power density and good transient performance.

### SUMMARY

According to one aspect, there is provided a power converter.

The power converter comprises a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. Each winding of each of the converter paths is inductively coupled to a winding of a different converter path, thereby forming a respective pair of inductively coupled windings. Each of the plurality of converter paths further comprise an additional series inductance.

According to another aspect of the present disclosure, there is provided a method for operating the power converter disclosed herein.

The method comprises generating a plurality of phase inputs using an input voltage; providing each phase input to different respective input nodes of the converter paths; and receiving an output voltage from the output nodes.

Those skilled in the art will recognize additional features and advantages upon reading the following detailed description, and upon viewing the accompanying drawings.

### BRIEF DESCRIPTION OF THE DRAWINGS

Examples are explained below with reference to the drawings. The drawings serve to illustrate certain principles, so that only aspects necessary for understanding these principles are illustrated.
FIG. 1 presents a circuit diagram of a trans-inductor voltage regulator (TLVR);
FIG. 2 presents a circuit diagram of a power converter;
FIG. 3 presents a circuit diagram of a power converter including additional inductances, according to an embodiment;
FIG. 4 presents a circuit diagram of a power converter including additional coupled inductances, according to another embodiment;
FIG. 5 presents a circuit diagram of a power converter including additional inductances coupled to another power converter, according to a further embodiment;
FIG. 6 presents an isometric view of a power converter including additional inductances provided by external inductors, according to an embodiment;
FIG. 7 presents an isometric view of a power converter including additional inductances provided by coupling of third windings to a single core layer, according to an embodiment;
FIG. 8 presents an isometric view of a power converter including additional inductances provided by coupling of third windings to separated core layers, according to another embodiment;
FIG. 9 presents an isometric view of a power converter including additional inductances provided by coupling of third windings to a single core layer provided on an underside of the power converter, according to an embodiment;
FIG 10A presents output voltage and output current waveforms of the power converter of FIG. 9 according to an example;
FIG. 10B presents phase current waveforms of the power converter of FIG. 9 according to an example,
FIG. 11 presents an isometric view of a power converter comprising converter paths having first and second windings with three turns; and
FIG. 12 is a flow diagram for a method for operating a power converter, according to an additional embodiment.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to a power converter comprising a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. Each first winding of the converter paths is inductively coupled to a second winding of a different converter path, thereby forming a respective pair of inductively coupled windings. Each of the plurality of converter paths further comprise an additional series inductance.

The proposed power converter provides a magnetic structure that may exhibit good transient response and power density when powering a high current load (e.g., a digital load). However, the equivalent static inductance of the power converter is very low. More particularly, in the power conductor the overall voltage balancing is achieved within the distributed chain of converter paths. The majority of the total inductor voltage is handled by the magnetizing inductance of the pairs of inductively coupled windings, and therefore only a low voltage is processed by the leakage inductance. However, by introducing a series inductance in each converter path, the equivalent static inductance may be increased with only a minimal amount of magnetic material, thereby reducing losses. By controlling this series inductance, the power converter can be tuned to be utilized in a variety of applications, such as when very high equivalent static inductance is required.

The proposed power converter with controlled leakage inductor enables zero DC bias magnetic flux within the majority of a material with high magnetic permeability (i.e. flux density depends only on output voltage and switching frequency). Furthermore, there is enabled an increase in leakage inductance of each pair of inductively coupled windings (i.e., each coupled inductor) by inserting a permeable material in between the first winding and second winding of each converter path.

To best understand this disclosure, it is useful to appreciate the operation of a trans-inductor voltage regulator (TLVR) as well as a zero bias TLVR. In contrast to a conventional multi-phase converter, in a TLVR a load jump leading to an increase of the equivalent duty cycle in one phase (and hence to an increase of current in this phase) results in an increase of output current in all phases. This inherent feature of the TLVR allows a much faster transient response corresponding to a significantly lower effective output inductance of the system.

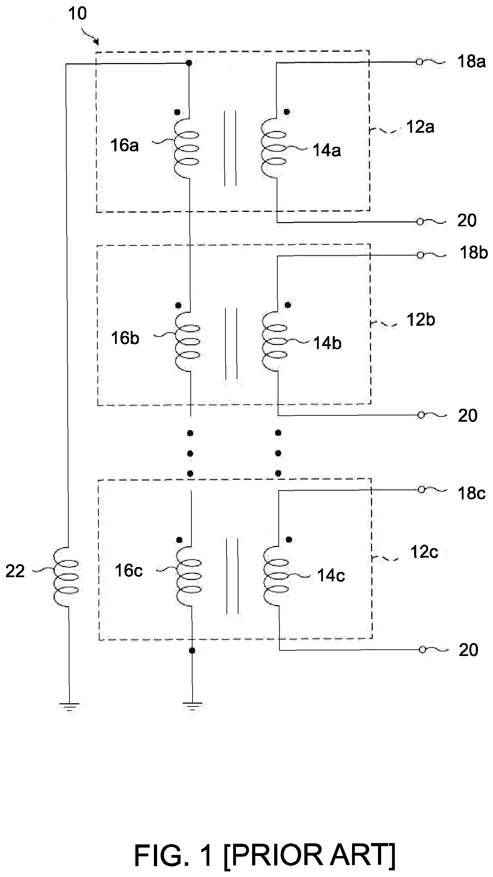

More specifically, Fig. 1 is a circuit diagram of an example TLVR 10. As shown, the TLVR 10 comprises a plurality of transformers 12a-c. Each transformer 12a-c comprises a first winding 14a-c on first side of the TLVR 10, and a second winding 16a-c on a second side of the TLVR 10. Each of the first windings 14a-c is provided between a respective input node 18a-c (coupled to a respective phase input) and a common output node 20. That is, the first windings 14a-c are each coupled to a different phase input, but are coupled to a common output. Each of the second windings 16a-c is coupled/provided in series with the others, and collectively they are referenced to ground. This series connection between ground is commonly known as the TLVR line.

The TLVR line may further comprise a transient inductor 22, in order to tune a leakage inductance of the TLVR. That is, in order to provide a TLVR with desired electrical properties, a transient inductor 22 is provided in series with each of the second windings 16a-c.

Accordingly, the TLVR 10 delivers power from an input voltage supplied in multiple phases, to a common output 20 that may be considered a point-of-load. Rather than using uncoupled individual windings coupled to each phase input (as in traditional voltage regulators), each phase input is input to a transformer 12a-c.

When there is a load jump (i.e. an increase in the current/power required by the load), a pulse width modulation (PWM) duty cycle associated with one or more of the phase inputs (i.e. of the one or more switches coupled to the input node 18a-c) may be increased. For TLVR 10, as all of the phases are indirectly coupled by the second windings 16a-c provided in series, an increase in current provided in one phase input leads to an increase of output current in all phases. This feature of the TLVR 10 allows a faster transient response corresponding to a significantly lower effective output inductance of the system.

In order to overcome issues in terms of power density of the TLVR 10, there has also been proposed a zero-bias TLVR. In contrast to the TLVR 10 disclosed in FIG. 1, each of the second windings 16a-c coupled in series are not coupled between an equipotential (e.g., ground). Instead, one end of the series coupled second windings 16-1a-c is coupled to a phase input, and opposite end of the series coupled second windings 16a-c is coupled to the common output node 20. In other words, the TLVR line is not referenced to ground, but is instead provided between a phase input, and the common output node 20. As a result, a required core area for each of the transformers 12a-c is reduced.

Nonetheless, problems arise with the zero-bias TLVR when several phases are provided in parallel. This is, with the provision of each further phase input, a further first winding is required, and thus another second winding in the TLVR path. Thus, with each further phase input, there is an increase of resistance in the TLVR line, which also now carries active energy to the load (in contrast to the standard TLVR 10). Inherently, such a limitation does not allow exploitation of the DC bias cancellation benefit when a large number of phases are needed, and moreover would intrinsically limit the bandwidth of the zero-bias TLVR.

Thus, whilst existing TLVRs provide improved transient response compared to standard multi-phase converters, they are limited in terms of power density. By connecting a phase input to the TLVR line to provide a zero-bias TLVR, a power density can be improved by reduction of required transformer core area. However, this setup is limited in the number of phases that may be coupled before resistive loses become prohibitive.

Furthermore, generally in multi-phase buck-based systems, it is crucial to achieve both low ripple in steady state for each phase and a high current slew rate during transients. This is especially the case for low-voltage and high-current applications (e.g., supplying high-current digital loads such as CPUs or GPUs). These requirements impose constraints on the actual inductor definition and/or the converter and magnetic topology.

TLVRs address the main transient limitations of a classic multi-phase buck converter. This is achieved by the equivalent transient inductance which is provided by the parallel action of a multi-phase buck converter with the magnetizing inductance of the transformers 12a-c acting as an auto-inductance, combined with the contribution provided by the electrical coupling, where all the phases are coupled to the transient inductor 22.

It is evident that the overall slew rate during dynamic operation depends on the transient inductor 22. However, the real benefit of the TLVR concept lies in its ability to maintain low ripple in the steady state while preserving high dynamic performance. This is because the steady-state inductance for each phase primarily depends on the ratio of *Lₜᵣ*//*Lₘ.* However, the clear limitation is the actual size of each TLVR inductor, and the presence of two windings in each inductor.

In general, maintaining zero-bias DC flux within each magnetic element presents several challenges, including constraints related to physical space and potential issues arising from increased losses due to the asymmetrical structure. The approach of the proposed power converter overcomes these limitations by distributing the phase voltage across the leakage chain, utilizing a mechanism distinct from that of the TLVR system. While the TLVR system operates based on electrical coupling, CMVR relies on the propagation of voltage through a chain of magnetically coupled elements.

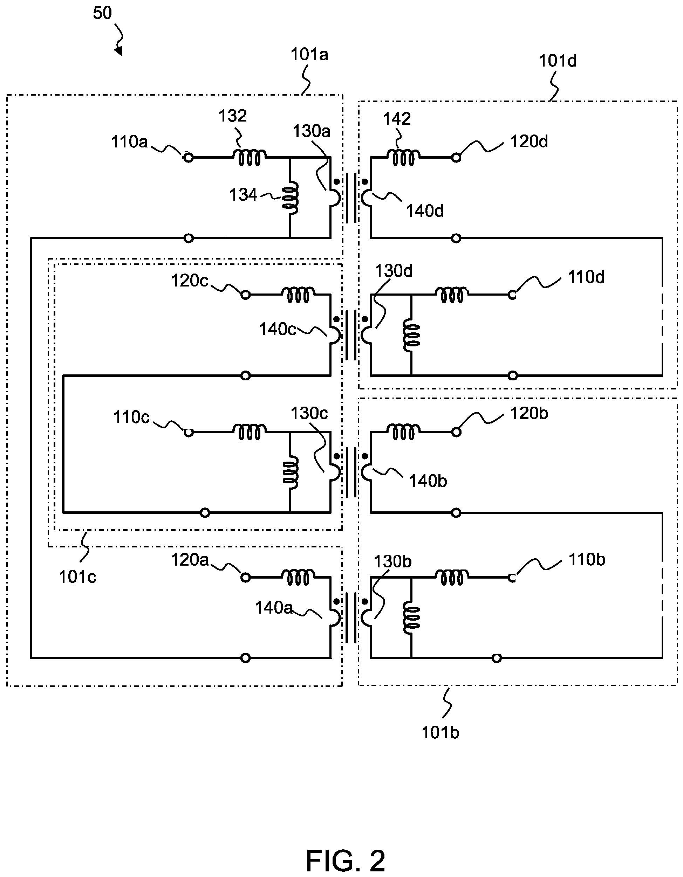

As a consequence, each magnetic core of the pairs of inductively coupled windings may be designed in order to withstand a half of a single phase input. Each winding equalizes the contribution of flux generated in each core, which is split equally in half among the corresponding cores of each branch. This results in a lower total volumetric magnetic occupation compared to a zero bias TLVR. Notably, these elements are not necessarily magnetically coupled to one another in a direct or uniform manner. Moreover, the proposed power converter intrinsically exhibits a ratio of *Nₚₕ*² between static and dynamic response respective di/dt slew rates , while maintaining zero-bias DC flux across all converter paths. This will be explained in more detailed in reference to FIG. 2 below.

By way of explanation, the power converter according to an aspect of disclosed concepts comprises a plurality of converter paths that are coupled in a circular manner. More specifically, each converter path comprises an input node, a first winding, a second winding, and an output node, coupled such that each first winding provided in series between the input node and the second winding of the same converter path, and the second winding is provided in series between the first winding and the output node of the same converter path. Each converter path is configured to conduct current in a same direction between the input node and the output node. In addition, each winding of each of the converter paths is inductively coupled to a winding of a different converter path, thereby forming a pair of inductively coupled windings. Each pair of inductively coupled windings form a coupled inductor, also referred to as an elemental transformer. As each converter path conducts current in a same direction, a DC flux induced in the first winding of each converter path is cancelled/compensated by the current flowing through the second winding coupled to the respective first winding. Equally, a DC flux induced in the second winding of each converter path is cancelled/compensated by the current flowing through the first winding coupled to the respective second winding.

The power converter hence provides a magnetic structure that may exhibit improved transient response and power density when powering a high current load (e.g., a digital load).

In other words, the power converter provides a plurality of coupled inductors, also referred to as elementary transformers (formed by coupling of two windings of different converter paths) coupled in series, with each coupled inductor/elementary transformer having windings exposed to current from two different converter paths (with each current having a different direction) thereby cancelling DC flux. As a result, a voltage regulator (i.e., a power converter) with good transient response and power density may be realised. In contrast to the TLVR, the power converter does not require a single TLVR path that can experience high resistive losses. Instead, DC resistance is balanced across the power converter. Further, as each elementary transformer does not experience a DC flux, a core of each elementary transformer may be smaller. The circular multi-phase magnetic structure of the voltage regulator therefore effectively couples all coupled input phases, similarly to a zero-bias TLVR, but without sharing a common winding among all the phases.

FIG. 2 presents a circuit diagram of such a power converter 150.

As shown, the power converter 50 comprises a plurality of converter paths 101a-d. Each converter path 101a-d comprises an input node 110a-d, an output node 120a-d, a first winding 130a-d, and a second winding 140a-d. The first winding 130a-d of each converter path 101a-d is coupled in series between the input node 110a-d and the second winding 140a-d of the respective converter path. The second winding 140a-d of each converter path 101a-d is coupled in series between the first winding 130a-d and the output node 120a-d of the respective converter path 101a-d.

Each converter path 101a-d is configured to conduct current in a same direction between the input node 110a-d and the output node 120a-d. That is, all of the converter paths 101a-d conduct current from their respective input node 110a-d to their respective output node 120a-d, or all of the converter paths 101a-d conduct current from their respective output node 120a-d to their respective input node 110a-d.

Every first winding 130a-d is inductively coupled to a second winding 140a-d of a different converter path 101a-d. That is, it is never the case that the first winding 130a-d of a converter path 101a-d is inductively coupled to the second winding 140a-d of the same converter path 101a-d. Thus, in the depicted embodiment, each first winding 130a-d of the converter paths 101a-d is inductively coupled to a second winding 140a-d of a different converter path 101a-d. Alternatively, in another embodiment, the first winding 130a-d of each converter path 101a-d may be inductively coupled to a first winding of a different converter path 130a-d, and the second winding 140a-d of each converter path 101a-d may be inductively coupled to a second winding of a different converter path 101a-d, given that the windings are wrapped around the core in different directions, thereby cancelling magnetic flux induced by current flowing through the windings. As a result, each pair of inductively coupled windings is coupled to each other pair of inductively coupled windings in a series loop (at least indirectly via another pair of inductively coupled windings).

For example, a first winding 130a of a first converter path 101a may be inductively coupled to a second winding 140b of a second converter path 101b thereby coupling the first converter path 101a to the second converter path 101b, a first winding 130b the second converter path 101b may be inductively coupled to a second winding 140c of a third converter path 101c thereby coupling the second converter path 101b to the third converter path 101c, a first winding 130c of the third converter path 101c may be inductively coupled to a second winding 140d of a fourth converter path 101d thereby coupling the third converter path 101c to the fourth converter path 101d, and a first winding 130d of the fourth converter path 101d may be inductively coupled to a second winding 140a of the first converter path 101a thereby coupling the fourth converter path 101d to the first converter path 101a.

Accordingly, in this example, each of the first to fourth converter paths 101a-d are coupled in a series loop by the inductive coupling of the windings. Of course, it is worth noting that there may be fewer converter paths (e.g., three converter paths), or more converter paths (e.g., five converter paths). In any case, the same principle applies with the first windings 130a-d inductively coupled to second windings 14a-d of a different converter path 101a-d, with each pair of inductively coupled windings being coupled in a closed chain loop.

To be clear, each pair of inductively coupled windings depicted in FIG. 2 is presented in the form of an elemental transformer equivalent circuit. This may be considered the case when the DC flux is cancelled in each of the first windings 130a-d and the second windings 140a-d. Nevertheless, interpretation of the present power converter should not be restricted to a series of elemental transformers. From another perspective, each pair of inductively coupled windings may be considered to be a coupled inductor - as it may be possible that some DC flux is present in the windings. Nevertheless, for sake of simplicity of interpretation, in FIG. 2 each first winding 130a-d is shown with a primary leakage inductance 132, each second winding 140a-d is shown with a second leakage inductance 142, and a magnetizing inductance 134 of each pair of windings is shown in parallel with each first winding 130a-d.

A magnetizing inductance 134 of each pair of inductively coupled windings may be significantly higher than a leakage inductance 132 of the respective first winding 130a and a leakage inductance 142 of the second winding 140d. For example, the magnetizing inductance 134 of each pair of inductively coupled windings may be at least ten times greater than each leakage inductance 132, 142. Nonetheless, other ratios between the magnetizing inductance and leakage inductance are possible.

In an embodiment, a core of magnetically permeable material may be wrapped around each first winding 130a-d and second winding 140a-d pair. This may help in improving the inductive coupling between each first winding 130a-d and second winding 140a-d pair.

Furthermore, the inductively coupled first winding 130a-d and second winding pairs 140a-d may include a same number of turns. In other words, each first winding 130a-d may be coupled to a second winding 140a-d having a same number of turns. Accordingly, a turns ratio may be close to unity. Indeed, this will also mean that, for each converter path 101a-d, the first winding 130a-d and the second winding 140a-d belonging to the same converter path 101a-d will have a same number of turns. This may ensure that each converter path 101a-d has a similar direct current resistance.

Nevertheless, it should be noted that the turns ratio may not be unity - for example when one of the converter paths 101a-d receives a different magnitude of current to the other converter paths 101a-d. That is, each of the windings may not have the same number of turns.

For instance, when one of the converter paths 101a receives a current of a smaller magnitude than the other converter paths 101b-d, then the first winding 130a and the second winding 140a of said converter path 101a may have a greater number of turns than the first windings 130b-d and the second windings 140b-d of the other converter paths 101b-d to ensure balanced operation of the power converter.

By way of simplified example, (for a power converter with four converter paths) given that three of the converter paths receive a 20A current and one of the converter paths receive a 10A current, the converter path receiving the 10A current may have a first winding and second winding with double the number of turns (e.g., 2 turns) compared to the first winding and second winding of the converter paths receiving the 20A currents. More generally, the number of turns of the first winding and second winding of each converter path multiplied by the current provided to the respective converter path will equal a constant, the constant being the same for each converter path.

Thus, for each least one of the converter paths 101a-d, the first winding 130a-d and second winding 140a-d of the converter path 101a-d may include a first number of turns. And, for at least one other converter path 101a-d, the first winding 130a-d and second winding 140a-d of the converter path 101a-d may include a second number of turns different to the first number of turns.

An advantage of the power converter 50, is that the converter paths 101a-d may be similar and/or arranged in a circular manner. More specifically, each first winding 130a-d may be similar to each other first winding 130a-d, and each second winding 140a-d may be similar to each other second winding 140a-d. Furthermore, each of the converter paths 101a-d may have a similar length (e.g., the connections between the input node 110a-d, the first winding 130a-d, the second winding 140a-d, and the output node 120a-d of each converter path 101a-d may be a similar length). As a result, each of the converter paths 101a-d may have a substantially similar direct current resistance. This leads to improved balance of the converter, with a good transient response. Indeed, in contrast to the zero-bias TLVR described above, this may be the case no matter how many phases are provided.

Furthermore, as the current through the first winding 130a-d and the current through the paired second winding 140a-d is flowing in different directions, a DC magnetic flux may be cancelled. Thus, from the perspective of each pair of inductively coupled windings, no steady state DC flux is provided. This means that each pair of inductively coupled windings does not require a large core to accommodate such DC flux. Thus, a power density of the voltage regulator is improved.

The input node 110a-d of each of the converter paths 101a-d may be coupled to respective phase inputs. When there is a load jump (i.e. an increase in the current/power required by a load coupled to the output nodes), a duty cycle of the voltage provided by one or more of the phase inputs may be increased. As each of the converter paths 101a-d are linked, an increase in current provided in one phase input leads to an increase of output current of all converter paths 101a-d. To be clear, each of the output nodes 120a-d of the plurality of converter paths 101a-d may be coupled to a common output node for connection to a load.

To be clear, each phase input may have different input voltage magnitudes and frequencies.

As a result of this power converter structure, an AC magnetic flux through each pair of inductively coupled windings only depends on a frequency of the voltage provided by each phase input, and on the voltage required by the load coupled to the output nodes.

Moreover, the phase inputs provided to each of the input nodes 110a-d may be provided by respective switching networks. The switching networks 112a-d may be driven by a controller to provide an appropriate AC voltage to each input node. In other words, each of the input nodes 110a-d of the converter paths may be coupled to respective switching networks. Any switching network that can receive an input voltage, and provide an alternating output voltage may be employed. In further examples, one or more of the input nodes may be coupled to an injection circuit.

Each switching network may be identical, or may be dissimilar, depending on the application. Therefore, to be clear, each switching network may be coupled to a different input voltage, and may provide a phase input having different frequencies.

In one example. each switching network may comprise a high side switch coupled between a common input voltage and the input node of the respective converter path, and a low side switch coupled between the input node of the respective converter path and a reference voltage. The reference voltage of each switching network may be ground, or may be a positive or negative reference potential. The power converter 100-3 may therefore be implemented with classic buck converters coupled to the respective input nodes 110a-d of each converter path. Each input node 110a-d may be coupled to a half-bridge between a DC input voltage and a reference potential (e.g., ground potential). This implementation may be particularly suited for when high current is needed for a low voltage load. This would enable zero-bias within each pair of inductively coupled windings during any load condition.

As stated above, the proposed power converter intrinsically exhibits a ratio of *Nₚₕ*² between static and dynamic response respective di/dt slew rates, while maintaining zero-bias DC flux across all converter paths. In a static condition, where PWM duty cycles of switching networks coupled to input nodes 110 are not overlapping, the difference of the input voltage Vᵢₙ and the output voltage Vₒᵤₜ will drive a positive current ripple across the series connection of leakage inductance elements 132, 142. With N coupled converter paths, the static current ripple *di*/*dt*(static) can hence be expressed as follows: $di / dt \left(static\right) = \left({V}_{in}-{V}_{out}\right) / \left({N}_{ph}\times {L}_{lk}\right)$ where Lₗₖ represents the leakage inductance of a single elementary transformer. Due to the intended strong coupling of phases the corresponding ripple is the same in all of the coupled converter paths.

In a dynamic condition when, for example, there is a steep positive load jump, all phases can be turned on at the same time (i.e., a phase voltage is applied to the input nodes 110a-d of each converter path 101a-d). In this case the voltage difference (Vᵢₙ - Vₒᵤₜ) is applied simultaneously to each of the leakage inductances of each elementary transformer. As all of the phases are fired simultaneously, the corresponding di/dt is the sum of all the converter paths or N times the di/dt of one converter path. Consequently the maximum dynamic di/dt can be expressed as follows: $di / dt \left(dynamic\right) = N \times \left({V}_{in}-{V}_{out}\right) / {L}_{lk}$

The disclosed power converter has hence a very low static current ripple and a very high dynamic load response capability. The ratio of dynamic di/dt and static di/dt can be expressed with formulas [1] and [2] as follows: $di / dt \left(dynamic\right) / di / dt \left(static\right) = {N}^{2}$

This intrinsic feature of the disclosed power converter enables hence to operate in static condition at low switching frequencies and to provide an extremely fast load response by overlapping some (or all) of the PWM signals of the switching networks coupled to converter paths coupled to each other in the converter. The steepest transient response with the highest dynamic di/dt is naturally achieved at 100 % overlap of all phases.

As the dynamic di/dt of this converter may be very high especially when implemented with a large number of converter paths, this disclosure teaches embodiments to tune the dynamic response by providing an additional series inductance to each converter path.

It should be noted that the power converter 50 demonstrated in FIG. 2 does not have a controlled leakage inductance. Indeed, an inductance cannot be introduced using a series transient inductor like in the case of the TLVR, as the power converter 50 does not include an additional winding to manage electrical coupling between all phases. Consequently, there is not an opportunity to incorporate a single physical inductance to tune the leakage inductance of the power converter.

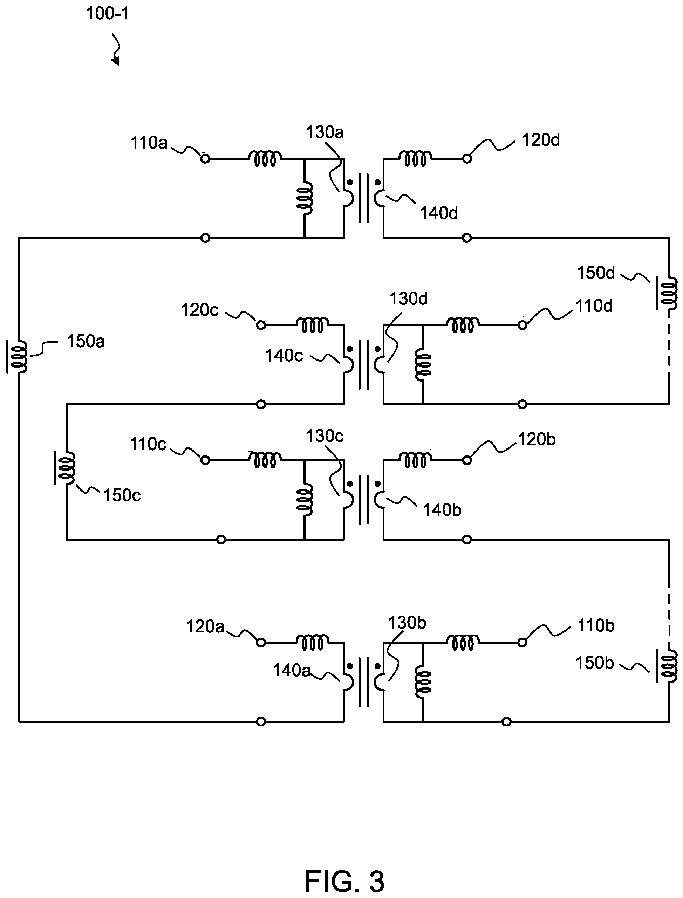

Thus, the power converter 100-1 represented in FIG. 3 has been proposed. FIG. 3 presents a circuit diagram of a power converter 100-1 including additional inductances, according to an embodiment. For sake of clarity of illustration, the dotted box denoting each converter path 101a-d has been omitted. Nevertheless, the same number of converter paths 101a-d are presented.

More particularly, each of the plurality of converter paths 101a-d further comprise an additional series inductance 150a-d. That is, each of the plurality of converter paths 101-d further comprise an additional means for generating a series inductance in the converter path. The additional series inductance increases the effective leakage inductance of each of the pairs of inductively coupled windings (i.e., increases the effective leakage inductance of the elemental transformers formed by the coupled windings).

Preferably, the inductance 150a-d of each converter path 101a-d is provided or generated in series between the first winding 130a-d and the second winding 140a-d of the converter path 101a-d. In other embodiments, the additional inductance is provided or generated in series between the input node 110a-d and the first winding 130a-d of each converter path 101a-d, or is provided or generated in series between the second winding 140a-d and the output node 120a-d of each converter path 101a-d.

Furthermore, the additional series inductance 150a-d of each converter path 101a-d may be substantially the same. That is, the henrys provided by each additional inductance 150a-d to each converter path 101a-d may be approximately the same. This may ensure balanced operation of the power converter 100-1.

The additional inductance 150a-d may be provided to/generated for each converter path 101a-d in a variety of ways.

The additional inductance 150a-d may be provided by an inductor coupled between the respective first winding and the respective second winding. That is, an inductor may simply be coupled between the first winding 130a-d and the second winding 140a-d of each converter path 101a-d.

Another option is to provide a magnetically permeable material near each converter path (either a single core, or a core for each converter path), which changes a series inductance of the converter path (i.e., adds an additional series inductance). More particularly, the path between the first winding and the second winding may be considered, or configured to be, a third winding. The third winding may then be coupled to a core of magnetically permeable material. This would provide an additional series inductance.

From another point of view, an inductor 150a-d may be coupled between the first winding 130a-d and second winding 140a-d of each converter path 101a-d. To achieved this, each of the plurality of converter paths 101a-d may further comprise a third winding coupled between the first winding 130a-d and the second winding 140a-d. In some cases, this third winding is merely a conductor connecting the first winding 130a-d to the second winding 140a-d. In addition, the third winding is inductively coupled to a core. The core may be formed of magnetically permeable material. The third winding of each converter path 101a-d and core (either provided for each converter path, or one monolithic core for all third windings/converter paths) thus form an inductor 150a-d. In some cases, when the core is shared between third windings, the inductor the converter path is magnetically coupled to the inductor of another converter path via the core. This will be described in more detail below.

Put another way, in a first embodiment, the power converter 100-1 with controlled leakage inductance may be viewed as a magnetic system designed to deliver current in a multiphase configuration coupled to the output nodes 120a-d. In this power converter 100-1, each switching network coupled to an input node 110a-d is coupled to a first winding with a first core wrapped around the first winding 130a-d. This first core exhibits an overall average flux, over one switching cycle, equal to zero due to the conduction of current in opposite directions by the first winding 130a-d and second winding 140a-d. Meanwhile, a second core of magnetically permeable material is provided over another part of the converter path, and demonstrates an average flux density proportional to the DC current flowing through the first winding 130a-d (and is not cancelled by DC current flowing in an opposite direction). That is, in this case, magnetically permeable material is provided in proximity to a part of the converter path 101a-d that is not the first winding 130a-d or second winding 140a-d - but may be an element coupled therebetween. This provides an additional inductance in the converter path 101a-d.

In a second embodiment, the power converter 100-1 with controlled leakage inductance may have converter paths 101a-d comprising a first winding 130a-d and a second winding 140a-d that pass through a cores made of a high-permeability material (e.g., relative permeability >300) with a second winding and first winding, respectively, of other converter paths. A second core of magnetically permeable material is also provided in proximity to another part of the converter path 101a-d, thereby providing an additional series inductance 150a-d. The second core may be constructed from a material with lower permeability compared to the first core (e.g. powder, nanocrystal etc.). In another embodiment, the second core may be made from a same material as the first core, but there may be a gap between the second core and the part of the converter path 101a-d (i.e., the third winding), in order to provide an appropriate leakage inductance.

In another embodiment, the power converter 100-1 with controlled leakage inductance may have a physical inductor placed in each converter path 101a-d. Such an inductor can be a commercial component or a specifically designed one.

To paraphrase, in order to introduce an additional inductance 150a-d in series with the first winding 130a-d and second winding 140a-d of each converter path 101a-d, there are a few options including:
(i) Introducing an external inductor component, coupled in series between the first winding 130a-d and second winding 140a-d;
(ii) Providing a layer/core of magnetically permeable material (with an optional gap) covering/partially covering or surrounding a part of the converter path 101a-d connecting the first winding 130a-d and second winding 140a-d.

It is worth noting that, when the power converter 100-1 has a small size, including the core of magnetically permeable material may also have a side effect of increasing the DC magnetic field inside the core material surrounding the pair of inductively coupled windings. As described above, usually this core material experiences DC cancelling - as the current flows in each paired winding in different directions. Of course, generally this is not the case (if this added core is far away from the inductively coupled pair of windings, for instance).

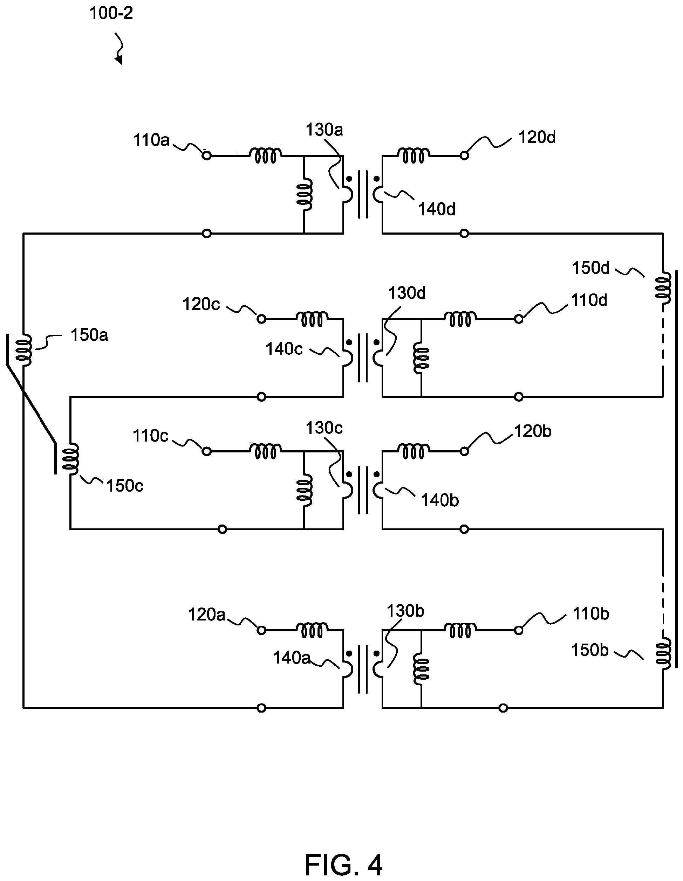

FIG. 4 presents a circuit diagram of a power converter 100-2 including additional coupled inductances, according to another embodiment. The power converter 100-2 of FIG. 4 is similar to the power converter 100-1 of FIG. 3, so repeated description of common features is omitted here for sake of brevity.

In contrast to the previous power converter 100-1, the inductor 150a-d of each converter path 101a-d is magnetically coupled to the inductor 150a-d of at least one other converter path 101a-d. To this end, some of the inductors 150a-d may share a common core, and therefore the inductors may be coupled.

In the depicted example, inductor 150a of converter path 101a is coupled to inductor 150c of converter path 150c, and inductor 150b of converter path 101b is coupled to inductor 150d of converter path 150d. Nevertheless, different combinations of coupled inductors 150a-d may be enacted. Indeed, each of the inductors 150a-d may be coupled to each other.

To be clear, the inductors 150a-d can be coupled in pairs or more, generating a huge number of possible options. Such coupling can be generated externally through a dedicated component, or eventually by designing the core in order to control the interactions of the third windings..

It is worth noting that the coupling between inductors 150a-d may be weaker than the inductive coupling of the inductively coupled pairs of windings. This may be due to a variety of factors, such as proximity of the windings, selection of core material, a difference in gap between the windings and the core materials, etc. Thus, this magnetic coupling can vary in coefficient and may be either direct or indirect, depending on the geometry and specific requirements. Nevertheless, the coupling may ensure that different converter paths 101a-d are more effectively coupled throughout the power converter.

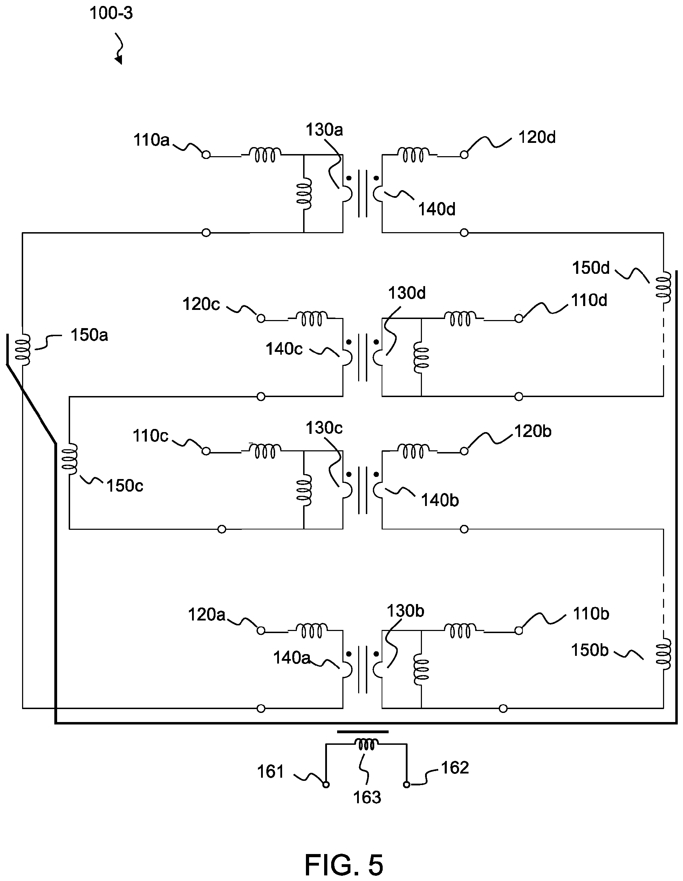

FIG. 5 presents a circuit diagram of a power converter 100-3 including additional inductances coupled to another power converter, according to a further embodiment.

In the depicted power converter 100-3, each of the inductors 150a-d, are magnetically coupled to each other. That is, as above, each of the inductors 150a-d share a core of magnetically permeable material. Once again, this may not necessarily be the case, and in some embodiments only some of the inductors may be magnetically coupled.

In addition, each of the inductors 150a-d are magnetically coupled to an external inductor 163, which in turn is provided as part of another power converter powering the same load as power converter 100-3. That is, nodes 161 and 162 may be nodes of a power converter that is configured to power a same load as the present power converter 100-3.

That is, each of the output nodes 120a-d of the plurality of converter paths 101a-d may be coupled to a common output node for connection to a load. In this case, some (or all) of the inductors 150a-d may be electrically coupled to another power converter coupled to the load. Thus, one or more of the inductances 150a-d may be electrically coupled (e.g., in a TLVR-like manner) to another power converter system (e.g., another circular power converter as described above, or another type of buck configuration) that supplied the same load.

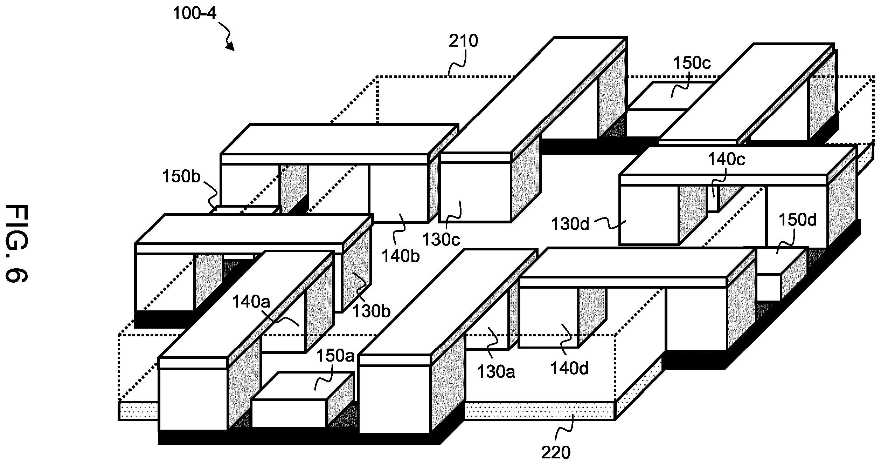

Moving on, FIGS. 6-8 provide isometric views of physical power converters 100-4, 100-5, 100-6 according to exemplary embodiments. These are meant by way of illustrative example only. That is, the power converter may take a different physical form and have different relative dimensions.

FIG. 6 presents an isometric view of a power converter 100-4 including additional inductances provided by external inductors, according to an embodiment.

The power converter 100-4, like the power converters depicted by circuit diagrams of FIGS. 2-5, comprises four converter paths. Each converter path comprises an input node and an output node, first windings 130a-d, and second windings 140a-d.

The input nodes and output nodes are not shown, as they are provided in the depicted embodiment on bottom surface of first windings 130a-d and second windings 140a-d, respectively. Therefore, the input nodes and output nodes may be coupled to components (e.g., switching networks and loads) via substate/PCB 220.

The first windings 130a-d and second windings 140a-d are provided in the form of conductive bars extending in a vertical direction through holes in a monolithic core 210 of magnetic material. In other embodiments, each pair of inductive coupled windings may be provided through individual cores of magnetically permeable material. In any case, the first windings 130a-d are inductively coupled to adjacent second windings 140a-d. In yet further embodiments, the first windings 130a-d and second windings 140a-d may extend in a direction other than a vertical direction.

Each converter path further comprises a plurality of connecting conductive bars, providing a conductive path from the input node to the output node via first windings 130a-d and second windings 140a-d. It will be noted that the plurality of connecting conductive bars are not provided in holes of the monolithic core 210.

In addition, inductors 150a-d are provided for each of the converter paths between respective first windings 130a-d and second windings 140a-d. These external inductors 150a-d may be commercially available inductors or custom designed inductors. Such inductors 1501-d may also be provided on a substrate/PCB.

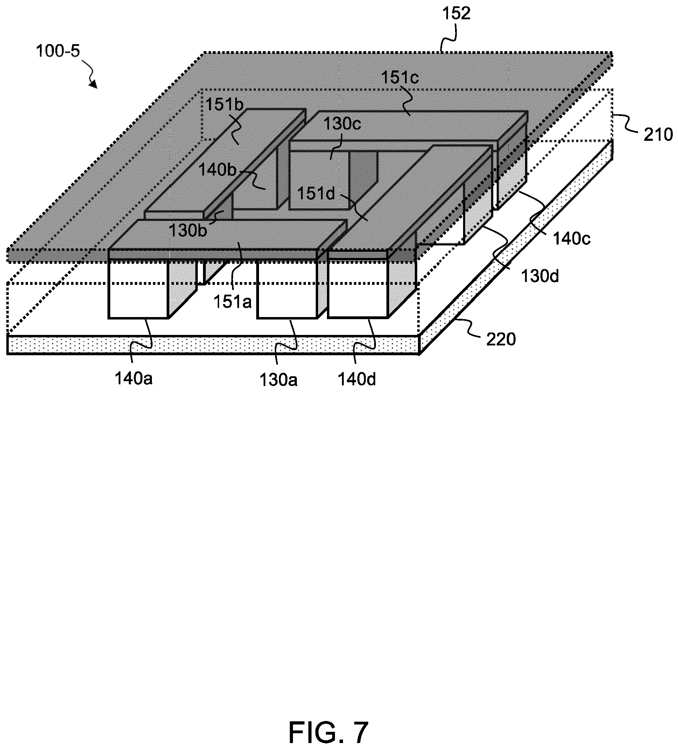

FIG. 7 presents an isometric view of a power converter 100-5 including additional inductances provided by coupling of third windings to a single core layer, according to an embodiment.

Once again, the power converter 100-5, like the power converters depicted by circuit diagrams of FIGS. 2-5, comprises four converter paths. Each converter path comprises an input node and an output node, first windings 130a-d, and second windings 140a-d.

The input nodes and output nodes are not shown, as they are provided in the depicted embodiment on bottom surface of first windings 130a-d and second windings 140a-d, respectively. Therefore, the input nodes and output nodes may be coupled to components (e.g., switching networks and loads) via substate/PCB 220.

The first windings 130a-d and second windings 140a-d are provided in the form of conductive bars extending in a vertical direction through holes in a monolithic core 210 of magnetic material. In other embodiments, each pair of inductive coupled windings may be provided through individual cores of magnetically permeable material. In any case, the first windings 130a-d are inductively coupled to adjacent second windings 140a-d. In yet further embodiments, the first windings 130a-d and second windings 140a-d may extend in a direction other than a vertical direction.

For each converter path, a conductive bar 151a-d connects the first winding 130a-d to the second winding 140a-d. To be clear, the conductive bar 151a-d does not extend through the core 210. Instead, the conductive bar 151a-d is provided on top of the core 210 (but may equally be physically separated/spaced from the core 210).

In addition, another core 152 of magnetically permeable material is provided over the conductive bars 151a-d. In this case, each of the conductive bars 151a-d may be considered to be third windings 151a-d. In this case, the core 152 is shared by the third windings 151a-d of each of the plurality of converter paths. Each of the third windings 151a-d thus form, with the core 152, an inductor for each converter path, coupled between first windings 130a-d and second windings 140a-d.

Viewed from another perspective, each of the third windings coupled between first windings 130a-d and second windings 140a-d comprises a conductive bar 151a-d. At least a part of a face of the conductive bar 151a-d of each of the third windings are arranged in a plane. The core of magnetic material is formed as a layer, wherein a face of the layer is arranged in parallel with the plane. As a result, an inductance is generated/provided in series between first windings 130a-d and second windings 140a-d of each converter path. Therefore, each converter path may be considered to have an inductor coupled between first windings 130a-d and second windings 140a-d - similarly to the power converter 100-4 of FIG. 6.

In some embodiments, a gap separates the face of the layer and the plane. That is, the core 152 and each of the conductive bars 151a-d may be separated by a gap. Accordingly, a desired series inductance may be introduced to each converter path. Indeed, the gap allows tuning of the series inductance. Equally, the material forming the core 152 may be chosen so as to provide a desired series inductance to each converter path.

Put another way, the power converter 100-5 comprises an upper layer/core that fully covers the converter paths (and specifically, the third windings 151a-d of each converter path), formed of magnetically permeable material. The upper core is made of a permeable material which must withstand the DC flux produced by each converter path. It can be made of a high permeability, low saturation material (e.g. ferrite) with an additional gap which allows the reduction of the flux. Alternatively, it can be made of low permeability, high saturation material (e.g. powder, nanocrystal) with or without the insertion of the gap.

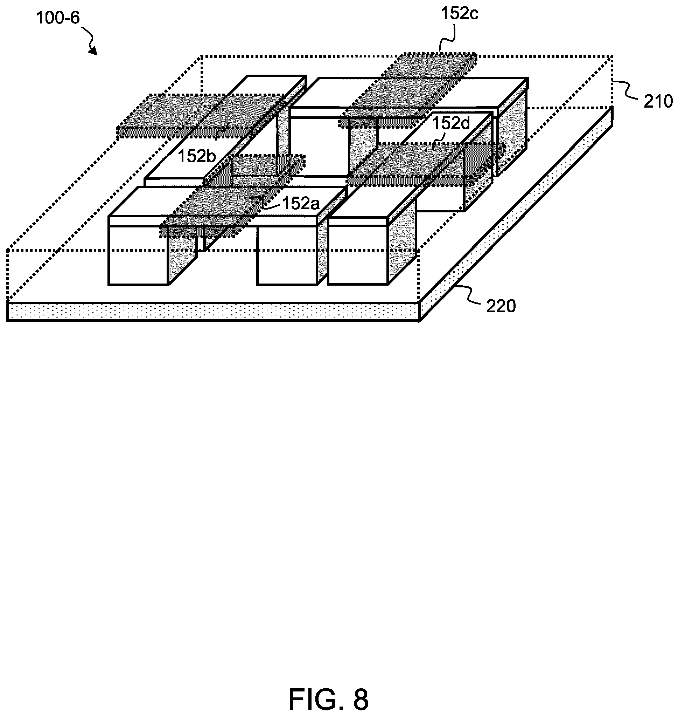

FIG. 8 presents an isometric view of a power converter 100-6 including additional inductances provided by coupling of third windings to separated core layers, according to another embodiment.

Whilst the power converter 100-5 of FIG. 7 had a core of magnetically permeable material completely covering each of the faces of the conductive bars of the third windings 151a-d, this is not required. Indeed, the power converter 100-6 of FIG. 8 shows that separated cores 152a-d may be provided over each third winding, thereby generating an additional inductance in each converter path. This demonstrates that (i) multiple separated cores 152a-d may be provided - it is not necessary for the core to be monolithic; and (ii) that only a part of the third winding 151a-d must be covered - indeed any covering by a core of magnetically permeable material may be used to generate an additional series inductance in each converter path.

Once again, each separated core 152a-d may be provided in contact with the third windings or may be provided with a gap therebetween. This may depend on the desired additional inductance for each converter path. Indeed, the material selection may also depend on the desired additional inductance.

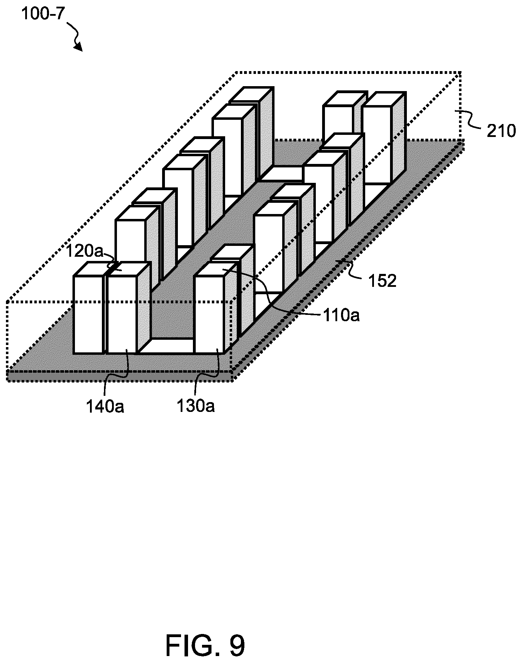

FIG. 9 presents an isometric view of a power converter 100-7 including additional inductances provided by coupling third windings to a single core.

The power converter 100-7 comprises eight converter paths. Each converter path comprises an input node and an output node, a first winding, and a second winding. Only the first converter path including input node 110a, output node 120a, first winding 130a and second winding 140a are labelled for sake of clarity of the figure, but it will be appreciated that the eight converter paths shown each include an input node and an output node, a first winding, and a second winding.

In contrast to the previously presented power converters, the power converter 100-7 has a single core 152 provided on a bottom surface of the power converter 100-7. Furthermore, the input nodes and output nodes are provided on a top surface of the power converter. Therefore, the input nodes and output nodes may be coupled to components (e.g., switching networks and loads) via this top surface.

It will also be noted that each of the first windings and second windings include a single turn. If the additional series inductance provided by the core in the present example is not provided, then the ripple may be unacceptable in some applications.

More specifically, when using the power converter 100-7 to regulate a 48V input voltage to a 12V output voltage (e.g., for intermediate bus converter, IBC, applications), a leakage inductance of each of the eight converter paths of the power converter 100-7 must be at least 125nH, leading to a total leakage inductance of all of the converter paths of at least 1µH. This leakage inductance is not typically possible to realize for coupled windings with a single turn.

Thus, it is paramount that the additional leakage inductance is provided in order to ensure adequately minimized output current ripple. That is, a single-turn configuration is insufficient for IBC applications, as the output ripple in response to transients will be excessive due to limitations on the leakage inductance provided by each of the pairs of inductively coupled windings. These applications therefore require the additional leakage inductance achieved through the provision of the monolithic core (e.g., by the provision of a magnetic sheet) coupled to each converter path.

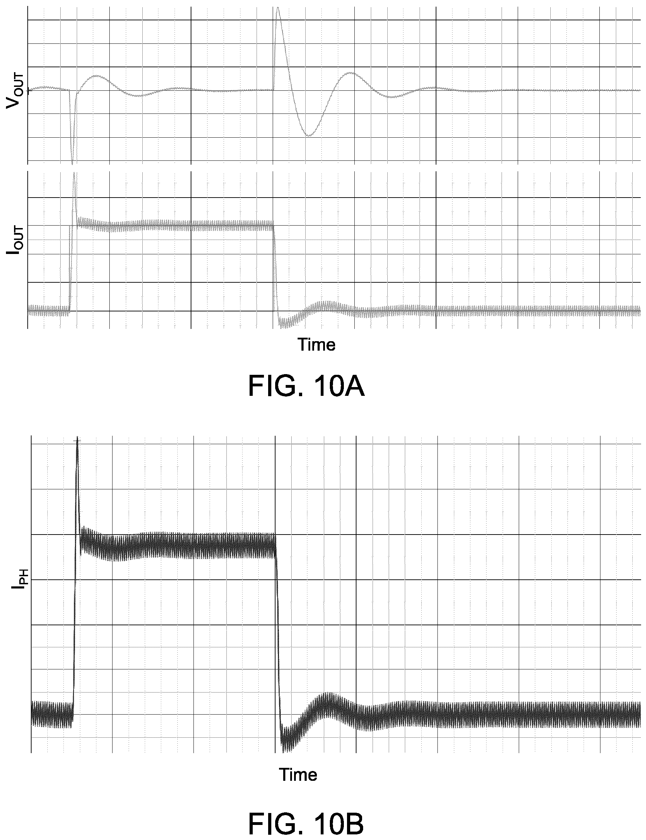

FIG 10A presents output voltage and output current waveforms of the power converter 100-7 of FIG. 9 according to an example. As shown, due to the introduced leakage inductance provided by the core, the power converter presents suitable output voltage and current ripples. This is similarly reflected in FIG. 10B, which presents phase current waveforms of the power converter 100-7 of FIG. 9.

Or course, it will be appreciated that the introduction of this external additional leakage inductance is not the only way to increase leakage inductance, reduce the flux density and improve overall performance.

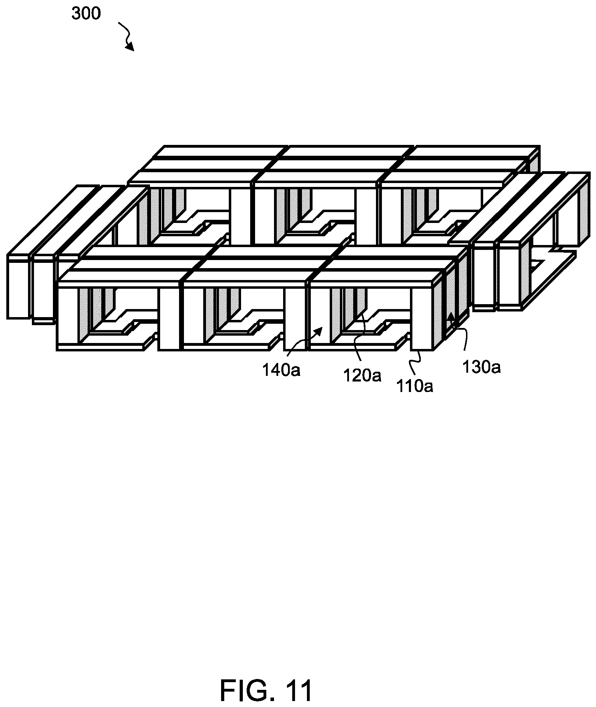

FIG. 11 presents an isometric view of a power converter 300 comprising converter paths having first and second windings with three turns, in contrast to the single turn windings of the previously depicted power converters.

Like power converter 100-7 of FIG. 9, the power converter 300 comprises eight converter paths. Each converter path comprises an input node and an output node, a first winding, and a second winding. Only the first converter path including input node 110a, output node 120a, first winding 130a and second winding 140a are labelled for sake of clarity of the figure, but it will be appreciated that the eight converter paths shown each include an input node and an output node, a first winding, and a second winding.

As shown, each of the first windings and second windings comprise three turns. Of course, this is meant by way of example, and the windings may include a different number of turns.

This multi-turn option benefits from a significantly lower flux density, reduced by a factor of 3 compared to a single turn implementation, due to the reduced leakage inductance - which is increased by a factor of nine compared to the single turn implementation, Accordingly, a satisfactory leakage inductance of the power converter 300 may be realised for high performance applications, such as use of the converter for IBC applications.

Nevertheless, it will also be appreciated that this comes at the disadvantage of an increased DC resistance due to the longer converter path.

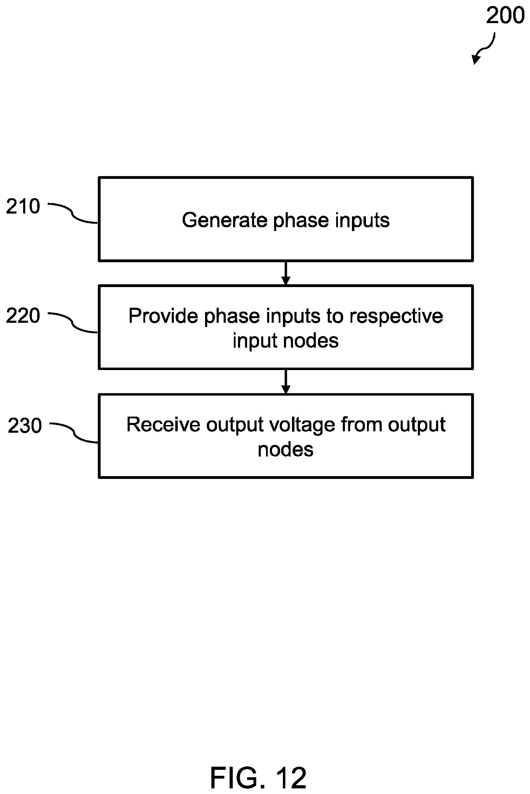

FIG. 12 presents a flow diagram of a method 200 for operating a power converter according to an embodiment. The power converter may be any power converter as discussed herein, comprising a plurality of converter paths.

In step 210, a plurality of phase inputs are generated using an input voltage. That is, an input voltage is used to generate phase inputs. Each phase input may have a same frequency, with a phase offset. Alternatively, the phase inputs may have different frequencies and/or magnitudes. The phase inputs may be generated by any known means, such as by using buck converters.

In step 220, each phase input is provided to different respective input nodes of the converter paths. In other words, the generated phase inputs are provided to the converter paths via the input nodes. Each individual phase input may be provided to a different converter path.

In step 230, an output voltage is received from the output nodes of the converter paths. The output voltage may be received from a common output node formed by connecting each of the output nodes together. The output voltage may then be provided to a load. For example, the load may be a digital node, such as a microprocessor, an accelerator, etc.

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. A power converter comprising:
   a plurality of converter paths, each converter path comprising an input node, an output node, a first winding, and a second winding, wherein the first winding is coupled in series between the input node and the second winding, and the second winding is coupled in series between the first winding and the output node, wherein each converter path is configured to conduct current in a same direction between the input node and the output node;
   wherein each winding of each of the converter paths is inductively coupled to a second winding of a different converter path, thereby forming a respective pair of inductively coupled windings, and
   wherein each of the plurality of converter paths further comprise an additional series inductance.
2. The power converter of embodiment 1, wherein the additional series inductance of each converter path is substantially the same.
3. The power converter of embodiment 1 or 2, wherein each of the plurality of converter paths comprise an inductor coupled between the respective first winding and the respective second winding.
4. The power converter of any of embodiments 1-3, wherein the inductor of each converter path is magnetically coupled to the inductor of at least one other converter path.
5. The power converter of any of embodiments 1-4, wherein each of the inductors are magnetically coupled to each other.
6. The power converter of any of embodiments 1-5, wherein each of the output nodes of the plurality of converter paths are coupled to a common output node for connection to a load, and wherein each of the inductors are electrically coupled to another power converter coupled to the load.
7. The power converter of any of embodiments 1-6, wherein each of the output nodes of the plurality of converter paths are coupled to a common output node for connection to a load, and wherein the inductor of each converter path is magnetically coupled to the inductor of at least one other converter path and/or to another power converter coupled to the load.
8. The power converter of any of embodiments 1-7, wherein the inductor of each of the plurality of converter paths comprises a third winding inductively coupled to a core.
9. The power converter of any of embodiments 1-8, wherein the core is shared by the third windings of each of the plurality of converter paths.
10. The power converter of any of embodiments 1-9, wherein each of the third windings comprises a conductive bar, wherein at least a part of a face of the conductive bar of each of the third windings are arranged in a plane, and wherein the magnetic core comprises a layer, wherein a face of the layer is arranged in parallel with the plane.
11. The power converter of any of embodiments 1-10, wherein a gap separates the face of the layer and the plane.
12. The power converter of any of embodiments 1-11, wherein the layer is formed of a low permeability material.
13. The power converter of embodiments 10-12, wherein the layer covers the whole of the face of the conductive bar of each of the third windings.
14. The power converter of embodiments 10-13, wherein the layer covers only a part of the face of the conductive bar of each of the third windings.
15. The power converter of any of embodiments 1-14, wherein a magnetizing inductance of each pair of coupled windings is at least ten times greater than a leakage inductance of the pair of coupled windings.
16. The power converter of any of embodiments 1-15, wherein each pair of coupled windings is coupled to each other pair of coupled windings in a series loop.
17. A method for operating the power converter of any of embodiments 1-16, comprising:
   generating a plurality of phase inputs using an input voltage;
   providing each phase input to different respective input nodes of the converter paths; and
   receiving an output voltage from the output nodes.

## Claims

1. A power converter (100) comprising:
a plurality of converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node;
wherein each winding of each of the converter paths is inductively coupled to a winding of a different converter path, thereby forming a respective pair of inductively coupled windings, and
wherein each of the plurality of converter paths further comprise an additional series inductance (150a-d).

2. The power converter of claim 1, wherein the additional series inductance (150a-d) of each converter path (101a-d) is substantially the same.

3. The power converter of claim 1 or 2, wherein each of the plurality of converter paths (101a-d) comprise an inductor (150a-d) coupled between the respective first winding (130a-d) and the respective second winding (140a-d).

4. The power converter of claim 3, wherein the inductor (150a-d) of each converter path (101a-d) is magnetically coupled to the inductor of at least one other converter path.

5. The power converter of claim 4, wherein each of the inductors (150a-d) are magnetically coupled to each other.

6. The power converter of claim 5, wherein each of the output nodes (120a-d) of the plurality of converter paths (101a-d) are coupled to a common output node for connection to a load, and wherein each of the inductors (150a-d) are electrically coupled to another power converter coupled to the load.

7. The power converter of claim 3, wherein each of the output nodes (120a-d) of the plurality of converter paths (101a-d) are coupled to a common output node for connection to a load, and wherein the inductor (150a-d) of each converter path is magnetically coupled to the inductor of at least one other converter path and/or to another power converter coupled to the load.

8. The power converter of any of claims 3-7, wherein the inductor (150a-d) of each of the plurality of converter paths (101a-d) comprises a third winding (151a-d) inductively coupled to a core (152).

9. The power converter of claim 8, wherein the core (152) is shared by the third windings (151a-d) of each of the plurality of converter paths (101a-d).

10. The power converter of claim 9, wherein each of the third windings (151a-d) comprises a conductive bar, wherein at least a part of a face of the conductive bar of each of the third windings are arranged in a plane, and wherein the core (152) comprises a layer, wherein a face of the layer is arranged in parallel with the plane.

11. The power converter of claim 10, wherein a gap separates the face of the layer and the plane.

12. The power converter of claim 10 or 11, wherein the layer is formed of a low permeability material.

13. The power converter of claims 10-12, wherein the layer of the core (152) covers the whole of the face of the conductive bar of each of the third windings (151a-d).

14. The power converter of claims 10-12, wherein the layer of the core (152) covers only a part of the face of the conductive bar of each of the third windings (151a-d).

15. A method (200) for operating the power converter of any of claims 1-14, comprising:
generating (210) a plurality of phase inputs using an input voltage;
providing (220) each phase input to different respective input nodes of the converter paths; and
receiving (230) an output voltage from the output nodes.

## Amended claims

### Amended claims in accordance with Rule 137(2) EPC.

1. A power converter (100) comprising:
a plurality of converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node;
wherein each winding of each of the converter paths is inductively coupled to a winding of a different converter path, thereby forming a respective pair of inductively coupled windings, and
**characterized in that** each of the plurality of converter paths further comprise an additional series inductance (150a-d).

2. The power converter of claim 1, wherein the additional series inductance (150a-d) of each converter path (101a-d) is substantially the same.

3. The power converter of claim 1 or 2, wherein each of the plurality of converter paths (101a-d) comprise an inductor (150a-d) coupled between the respective first winding (130a-d) and the respective second winding (140a-d).

4. The power converter of claim 3, wherein the inductor (150a-d) of each converter path (101a-d) is magnetically coupled to the inductor of at least one other converter path.

5. The power converter of claim 4, wherein each of the inductors (150a-d) are magnetically coupled to each other.

6. The power converter of claim 5, wherein each of the output nodes (120a-d) of the plurality of converter paths (101a-d) are coupled to a common output node for connection to a load, and wherein each of the inductors (150a-d) are electrically coupled to another power converter coupled to the load.

7. The power converter of claim 3, wherein each of the output nodes (120a-d) of the plurality of converter paths (101a-d) are coupled to a common output node for connection to a load, and wherein the inductor (150a-d) of each converter path is magnetically coupled to the inductor of at least one other converter path and/or to another power converter coupled to the load.

8. The power converter of any of claims 3-7, wherein the inductor (150a-d) of each of the plurality of converter paths (101a-d) comprises a third winding (151a-d) inductively coupled to a core (152).

9. The power converter of claim 8, wherein the core (152) is shared by the third windings (151a-d) of each of the plurality of converter paths (101a-d).

10. The power converter of claim 9, wherein each of the third windings (151a-d) comprises a conductive bar, wherein at least a part of a face of the conductive bar of each of the third windings are arranged in a plane, and wherein the core (152) comprises a layer, wherein a face of the layer is arranged in parallel with the plane.

11. The power converter of claim 10, wherein a gap separates the face of the layer and the plane.

12. The power converter of claim 10 or 11, wherein the layer is formed of a low permeability material.

13. The power converter of claims 10-12, wherein the layer of the core (152) covers the whole of the face of the conductive bar of each of the third windings (151a-d).

14. The power converter of claims 10-12, wherein the layer of the core (152) covers only a part of the face of the conductive bar of each of the third windings (151a-d).

15. A method (200) for operating the power converter of any of claims 1-16, comprising:
generating (210) a plurality of phase inputs using an input voltage;
providing (220) each phase input to different respective input nodes of the converter paths; and
receiving (230) an output voltage from the output nodes.
